# EUROPÄISCHE PATENTSCHRIFT

(11) **EP 0 248 063 B1**
(45) Veröffentlichungstag und Bekanntmachung des Hinweises auf die Patenterteilung: **10.03.1993**
(21) Anmeldenummer: 87900121.2
(22) Anmeldetag: 11.12.1986
(51) Int. Cl.: H04N 5/782, H04N 7/087

(54) **VERFAHREN ODER EINRICHTUNG ZUM PROGRAMMIEREN EINES VIDEORECORDERS**
PROCESS OR SYSTEM FOR PROGRAMMING A VIDEO-RECORDER
PROCEDE OU SYSTEME DE PROGRAMMATION D'UN MAGNETOSCOPE

(30) Priorität: 13.12.1985 DE 3544183
(43) Veröffentlichungstag der Anmeldung: 09.12.1987
(73) Patentinhaber: Deutsche Thomson-Brandt GmbH, 78003 Villingen-Schwenningen (DE)
(72) Erfinder: GEIGER, Erich, D-7731 Unterkirnach (DE); FECHNER, Rainer, D-7730 VS-Villingen (DE)
(86) Internationale Anmeldenummer: EP8600738
(87) Internationale Veröffentlichungsnummer: WO8703766

(56) Entgegenhaltungen:
- DE-A- 2 918 846
- DE-A- 3 335 082
- GB-A- 1 545 765
- US-A- 4 337 480
- Patent Abstracts of Japan, Band 4, Nr. 117 (E-22)(599), 20. August 1980, siehe die ganze Zusammenfassung
- Rundfunktechnische Mitteilungen, Band 26, Nr. 6, Juni 1982, (Hamburg, DE), G. Hofmann et al.: "Videotext programmiert Videorecorder", Seiten 254-257, siehe das ganze Dokument

## Beschreibung

Die Erfindung betrifft ein Verfahren oder eine Einrichtung zum Programmiereneines Videorecorders nach dem Oberbegriff des Anspruchs 1. Zum Programmieren eines Videorecorders werden im allgemeinen Daten wie zum Beispiel Sendeanstalt, Wochentag, Start- und Stop-Uhrzeit, VPS-Code und/oder dergleichen benötigt.

Aus der DE-A-33 35 082 ist ein Verfahren der eingangs genannten Art bekannt. Hierdurch wird dem Fernsehteilnehmer ermöglicht, seinen Videorecorder auf den Empfang und das Aufzeichnen gewünschter Sendungen zu programmieren. Mittels einer auf dem Bildschirm einstellbaren und bewegbaren Markierung - eines sogenannten Cursors - kann der Fernsehteilnehmer auf Programmankündigungen aufweisenden Videotexttafeln diejenigen Sendungen anwählen, die der Videorecorder automatisch aufzeichnen soll. Befindet sich der Cursor auf der Zeile einer angewählten Sendung, so werden durch Betätigen einer zusätzlichen Taste auf der Fernbedienungseinheit die Programmierdaten dieser Zeile gespeichert. Abgesehen von einer Leitungsverbindung zwischen Fernsehempfangsgerät und Videorecorder sind jedoch nähere Einzelheiten, wie diese Daten in einen Programmierspeicher des Videorecorders übertragen oder etwa weiter ausgewertet werden sollen, der DE-A-33 35 082 nicht entnehmbar.

Das bekannte Verfahren zum Programmieren eines Videorecorders ist von einer ungeübten Person leicht beherrschbar, weil es ohne umständlich bedienbare Hilfsmittel, wie sie z.B. Strichcodes in Verbindung mit Lichtgriffeln darstellen, arbeitet.

Der Erfindung liegt die Aufgabe zugrunde, ein Verfahren oder eine Einrichtung zum Programmieren eines Videorecorders weiter zu verbessern.

Diese Aufgabe wird durch die im Anspruch 1 bzw. 11 angegebenen Merkmale gelöst. Diese Aufgabe wird auch durch die im Anspruch 2 bzw. 12 angegebenen Merkmale gelöst.

Das erfindungsgemäße Verfahren und/oder die erfindungsgemäße Einrichtung ermöglichen ein Programmieren des Videorecorders mit zum Aufzeichnen gewünschter Sendungen benötigten Daten unter Ausnutzung des ohnehin im Fernsehempfänger vorhandenen Videotextdecoders.

Die erfindungsgemäß nach Anspruch 1 bzw. 11 vorgesehenen Merkmale ermöglichen vorteilhafterweise mittels in dem Zwischenspeicher gespeicherter Videotextsignale das Zusammenstellen einer auf die Aufzeichnungswünsche des Benutzers abgestimmten Menüseite und deren Darstellen auf dem Bildschirm des Fernsehempfängers.

Durch die erfindungsgemäß nach Anspruch 2 bzw. 12 vorgesehenen Merkmale ist in vorteilhafter Weise eine Rückmeldung des Speicherzustandes des Videorecorders an den Fernsehempfänger ermöglicht.

Das übertragen der für das Programmieren benötigten Daten vom Fernsehempfänger zum Videorecorder erfolgt dabei vorzugsweise über eine Infrarotstrecke.

In Weiterbildung der Erfindung werden bei einem über eine Fernbedieneinheit programmierbaren Videorecorder die vom Fernsehempfänger zum Videorecorder zu übertragenden Daten so codiert, daß sie den entsprechenden, von der Fernbedieneinheit ausgesandten Daten gleichen. Dies hat den Vorteil, daß die bei einem solchen Videorecorder ohnehin vorhandene Signalempfangs-, Auswertungs- und Steuereinheit ohne wesentliche Veränderungen für das erfindungsgemäße Verfahren und/oder die erfindungsgemäße Einrichtung benutzt werden können. Für den Videorecorder stellt es dann keinen Unterschied dar, ob er die zum Programmieren benötigten Daten von seiner zugehörigen Fernbedieneinheit oder aber erfindungsgemäß vom Fernsehempfänger her übertragen erhält.

Vorteilhafte Weiterbildungen der Erfindung sind in den Unteransprüchen beschrieben.

Weitere Vorteile, Merkmale und Einzelheiten der Erfindung werden im folgenden an einem bevorzugten Ausführungsbeispiel anhand der Zeichnung erläutert. Dabei zeigen:
- Fig. 1: einen erfindungsgemäß ausgebildeten Teil eines Fersehempfängers und
- Fig. 2: einen mit diesem Teil zusammenarbeitenden Teil eines Videorecorders.

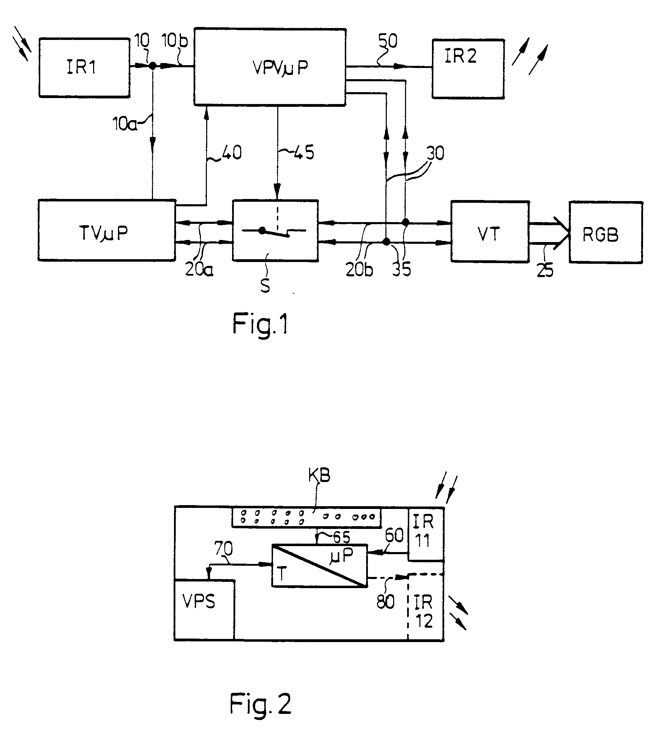

Ein in Fig. 1 schematisch dargestellter Teil eines Fernsehempfängers weist einen Infrarot-Empfänger IR1 auf, der zum Empfang von beispielsweise über eine Infrarot-Fernbedieneinheit aussendbaren Signalen dient. Die von dem Infrarot-Empfänger IR1 empfangenen Signale werden über eine Leitung 10 und eine daran angeschlossene Leitung 10a an einen der Steuerung des Fernsehempfängers dienenden Mikroprozessor TVµP sowie über eine ebenfalls an die Leitung 10 angeschlossene Leitung 10b einem einer speziellen Datenauswertung und Datensteuerung dienenden Mikroprozessor VPVµP zugeführt. Letzterer dient in unten näher beschriebener Weise dazu, ein Videorecorder-Programmieren mittels über Videotextdaten entnommenen Informationen zu ermöglichen.

Bei neueren, zum Empfang und zur Wiedergabe von Videotextsignalen geeigneten Fernsehempfängern ist der Mikroprozessor TVµP über einen bidirektionalen Datenbus, einen sogenannten I²C-Bus, mit einem Videotext-Decoder VT verbunden, dessen Ausgangssignale über in Fig. 1 schematisch mittels eines Pfeils 25 dargestellte Leitungen einem Bildschirm RGB des Fernsehempfängers zugeführt werden. Die in dem Videotext-Decoder VT erzeugten Schrift- und/oder Bildzeichen lassen sich so auf dem Bildschirm RGB darstellen.

Bei dem erfindungsgemäß ausgebildeten Fernsehempfänger läßt sich der den Mikroprozessor TVµP und den Videotext-Decoder VT verbindende bidirektionale Datenbus, der hier ebenfalls durch einen I²C-Bus realisiert ist, durch eine steuerbare Schalteinrichtung S unterbrechen. Der genannte Datenbus führt vom Mikroprozessor TVµP über Leitungen 20a zunächst zu der Schalteinrichtung S, von wo aus über die Leitung 20a ankommende Signale bei geschlossener Schalteinrichtung S über Leitungen 20b zum Videotext-Decoder VT gelangen. Weiter unten ist näher erläutert, unter welchen Bedingungen die Schalteinrichtung S geöffnet bzw. geschlossen ist.

Der Mikroprozessor VPVµP ist ebenfalls über einen bidirektionalen Datenbus, wiederum realisiert als I²C-Bus, mit dem Videotext-Decoder VT verbunden. Dies geschieht, indem an den Mikroprozessor VPVµP angeschlossene Leitungen 30 mit den jeweils entsprechenden Leitungen 20b an Stellen 35 beispielsweise über Steckkontakte, Lötstellen o. dgl. verbunden sind. Der genannte Datenbus ist demnach durch die Leitungen 30 und 20b verwirklicht.

Über eine Leitung 40 erhält der Mikroprozessor VPVµP laufend vom Mikroprozessor TVµP Informationen über den Benutzungszustand des durch die Leitungen 20a und 20 b gebildeten Datenbusses. Sollen zwischen dem Mikroprozessor VPVµP und dem Videotext-Decoder VT Daten ausgetauscht werden, so geschieht dies erst dann, wenn über die Leitung 40 signalisiert ist, daß über die Leitungen 20a derzeit keine Daten übermittelt werden. Dabei gibt dann der Mikroprossor VPVµP außerdem über eine Leitung 45 ein Betätigungssignal an die Schalteinrichtung S ab, die daraufhin bis zum Vorliegen anderslautender Befehle oder bis zum Wegfall des Betätigungssignals die Leitungen 20a von den Leitungen 20b abkoppelt. Ab diesem Zeitpunkt übernimmt dann der Mikroprozessor VPVµP anstelle des Mikroprozessors TVµP auch das Steuern des Videotext-Decoders VT.

Der Befehl zum Umstellen von Datenaustausch zwischen dem Mikroprozessor TVµP und dem Videotext-Decoder auf den Datenaustausch zwischen dem Mikroprozessor VPVµP und dem Videotext-Decoder VT kann über die Infrarot-Fernbedieneinheit und den Infrarot-Empfänger IR1 eingegeben werden. Ist dieser Befehl ausgeführt und wird soeben aus sogenannten Seitenspeichern des Videotext-Decoders eine Videotexttafel mit Fernsehprogramm-Ankündigungen auf dem Bildschirm dargestellt, so können dort aufgeführte Sendungen mittels weiterer Fernbedienungsbefehle über einen auf dem Bildschirm darstellbaren Cursor markiert werden.

Gemäß einem Videotext-Standard enthalten die genannten Ankündigungen Informationen über Sendeanstalt, das Sendedatum, die prognostizierte Start- bzw. Stop-Uhrzeit der jeweiligen Sendung sowie eine Kurzform ihres Titels. Einige europäische Sendeanstalten übermitteln auf den Videotexttafeln zusätzlich hierzu noch einen besonderen, der jeweiligen Sendung zugeordneten sogenannten VPS-Code ("Videorecorder-Programmier-System"), der gemäß einem weiteren Standard, dem VPS-Standard, ein sendergesteuertes Aufzeichnen von Sendungen exakt von deren tatsächlichem Start bis zu deren tatsächlichem Stop ermöglicht.

Entsprechend den Wünschen des Benutzers können nun die zu den markierten Sendungen gehörenden Daten aus dem Seitenspeicher des Videotext-Decoders VT heraus in einen beispielsweise im Mikroprozessor VPVµP enthaltenen Zwischenspeicher dupliziert werden. Vorzugsweise werden dabei sämtliche zu der betreffenden Sendung gehörenden Informationen aus dem Seitenspeicher übernommen. Für weniger komfortable Fernsehempfänger kann jedoch auch vorgesehen sein, daß zur Einsparung von Speicherplatz beispielsweise die Kurzform des Titels der betreffenden Sendung nicht in dem Zwischenspeicher gespeichert wird.

Im hier beschriebenen Ausführungsbeispiel können Informationen von mehreren - beispielsweise acht - Sendungen in dem Zwischenspeicher gespeichert werden. Der Benutzer kann sich so eine speziell auf seine Aufzeichnungswünsche abgestimmte sogenannte "Menüseite" zusammenstellen. Diese Informationen können dann wiederum über den von den Leitungen 30 und 20b gebildeten Datenbus und den Videotext-Decoder VT auf dem Bildschirm RGB dargestellt werden. Der Benutzer kann so kontrollieren, welche Informationen aktuell im Zwischenspeicher enthalten sind.

Auf besonderen Befehl hin ermittelt der Mikroprozessor VPVµP aus den im Zwischenspeicher enthaltenen Informationen die zum Programmieren des Videorecorders erforderlichen Daten und codiert sie entsprechend dem für die Videorecorder-Fernbedieneinheit vorgesehenen Übertragungscode. Diese codierten Daten werden über eine Leitung 50 vom Mikroprozessor VPVµP an einen Infrarot-Sender IR2 übermittelt, der sie in Infrarot-Signale umsetzt. Es kann vorgesehen sein, daß der Zwischenspeicher - beispielsweise falls hier Informationen über mehr als eine Sendung gespeichert sind - zusätzlich Informationen über im Programmspeicher des Videorecorders vorzusehende Speicherplatznummern enthält. Die zum Programmieren benötigten Daten können Sendung für Sendung oder aber als ein einziger Block für alle gewünschten Sendungen von dem Infrarot-Sender IR2 ausgesandt werden.

Die vom Infrarot-Sender IR2 ausgesandten Infrarot-Signale gelangen zu einem in Fig. 2 dargestellten Teil des Videorecorders und werden dort von einem Infrarot-Empfänger IR11 empfangen.

Dieser Videorecorder ist als herkömmlicher, fernbedienbarer und über seine Fernbedieneinheit programmierbarer Videorecorder ausgebildet. Dargestellt sind in Fig. 2 lediglich noch eine vom Infrarot-Empfänger IR11 zu einer einen Mikroprozessor µP und einen Programmierspeicher T aufweisenden Einheit führende Leitung 60. Diese Einheit ist zugleich über eine Leitung 65 an ein Tastenfeld KB angeschlossen sowie über eine bidirektionale Leitung 70 mit einem Decoder VPS verbunden.

Der Decoder VPS ermöglicht in vorerwähnter Weise einen sendergesteuerten Aufzeichnungsbetrieb des Videorecorders immer dann, wenn ein in den Programmierspeicher T des Videorecorders eingegebener VPS-Code mit dem über den Decoder VPS aus dem Fernsehsignal ermittelten, der vom Videorecorder empfangenen Sendung zugeordneten VPS-Code übereinstimmt.

Der Mikroprozessor VPVµP des Fernsehempfängers ermittelt aus den im Zwischenspeicher enthaltenen Informationen die zum Programmieren des Videorecorders erforderlichen Daten, beispielsweise die prognostizierten Start- und Stop-Uhrzeiten - gegebenenfalls erweitert um einige Minuten an "Sicherheitsspielraum" (etwas früher als angegeben starten, etwas später als angegeben stoppen) - und/oder den VPS-Code, und leitet diese Daten über die Infrarot-Übertragungsstrecke IR2 - IR11 an den Videorecorder weiter. Dort werden sie schließlich im Programmierspeicher T gespeichert und dienen dann in bekannter Weise zum automatischen - gegebenenfalls mittels VPS-Code gestarteten - Aufzeichnen der gewünschten Sendung(en).

Am Videorecorder kann ein über eine Leitung 80 mit dessen Mikroprozessor µP verbundener Infrarot-Sender IR12 vorgesehen sein; in Fig. 2 sind diese durch gestrichelt gezeichnete Linien dargestellt. Bei geeigneter, auf die entsprechenden Einrichtungen des Fernsehempfängers abgestimmter und durch den Mikroprozessor µP erfolgender Codierung können so Daten auch vom Videorecorder über den Infrarot-Sender IR 12 ausgesandt, vom Infrarot-Empfänger IR1 des Fernsehempfängers empfangen und dort im Mikroprozessor VPVµP ausgewertet werden. Auf diese Weise können beispielsweise im Programmierspeicher T enthaltene Informationen, die Aufzeichnungsaufträge betreffen, auf dem Bildschirm RGB dargestellt werden. Dabei können eventuell auch die in dem Zwischenspeicher noch vorhandenen Informationen dazu verwendet werden, die auf den ursprünglichen Videotexttafeln der Sendung oder den Sendungen zugeordnete Textzeilen auf dem Bildschirm RGB darzustellen.

Bei einem weiteren bevorzugten Ausführungsbeispiel ist vorgesehen, daß über die Infrarot-Übertragungsstrecke IR12 - IR1 eine automatische Rückmeldung vom Videorecorder an den Fernsehempfänger in einem oder mehreren der folgenden Fälle erfolgt:
a) bei Übernahme der Daten in den Programmierspeicher T
b) bei Überlauf des Programmierspeichers T
c) Plätze im Programmierspeicher T abgearbeitet
d) Plätze im Programmierspeicher T noch nicht abgearbeitet
e) fehlerhafte Übertragung erkannt
f) Rückmelden von im Programmierspeicher T freigewordenen Plätzen
Das Abfragen der Plätze im Programmierspeicher T erfolgt dabei durch den Mikroprozessor µP des Videorecorders. Die daraus resultierende Information wird in entsprechend codierter Form über die Infrarot-Übertragungsstrecke IR12 - IR1 zum Fernsehempfänger geleitet, wo sie vom Mikroprozessor VPVµP ausgewertet wird. Wie oben beschrieben läßt sich das Ergebnis dieser Auswertung wieder auf dem Bildschirm RGB darstellen. Der Benutzer erhält so schnell einen genauen Überblick über die von ihm zum Aufzeichnen ausgewählten Sendungen. Eventuell falsch oder irrtümlich gespeicherte Sendungen lassen sich einfach, sicher und schnell korrigieren.

## Patentansprüche

1. Verfahren zum Programmieren eines Videorecorders mit Daten, die zum Aufzeichnen gewünschter Sendungen benötigt werden, unter Verwendung eines zum Empfang und zur Wiedergabe von Videotextsignalen geeigneten Fernsehempfängers, wobei die benötigten Daten aus Programmankündigungen aufweisenden, über Videotextsignale übermittelten Tafeln (Videotexttafeln) mit Hilfe einer einstellbaren Markierung auf Befehl aus einem ersten Speicher (Videotextspeicher) des Fernsehempfängers entnehmbar und in einen Speicher (Programmierspeicher (T)) des Videorecorders eingebbar sind, und wobei in dem Fernsehempfänger ein zweiter Speicher vorgesehen ist, **dadurch gekennzeichnet**, daß auf den Befehl hin den benötigten Daten zugeordnete Videotextsignale in dem als Zwischenspeicher ausgebildeten zweiten Speicher des Fernsehempfängers gespeichert werden, daß aus den in dem Zwischenspeicher gespeicherten Videotextsignalen alsbald oder auf besonderen Befehl hin die benötigten Daten entnommen und drahtlos zum Videorecorder übertragen werden, wo sie im Programmierspeicher (T) des Videorecorders gespeichert werden, daß die in dem Zwischenspeicher gespeicherten Videotextsignale auf Abruf auf dem Bildschirm des Fernsehempfängers darstellbar sind, und daß in dem Zwischenspeicher eine oder mehrere Zeilen einer oder mehrerer Videotexttafeln speicherbar sind.

2. Verfahren zum Programmieren eines Videorecorders mit Daten, die zum Aufzeichnen gewünschter Sendungen benötigt werden, unter Verwendung eines zum Empfang und zur Wiedergabe von Videotextsignalen geeigneten Fernsehempfängers, wobei die benötigten Daten aus Programmankündigungen aufweisenden, über Videotextsignale übermittelten Tafeln (Videotexttafeln) mit Hilfe einer einstellbaren Markierung auf Befehl aus einem ersten Speicher (Videotextspeicher) des Fernsehempfängers entnehmbar und in einen Speicher (Programmierspeicher (T)) des Videorecorders eingebbar sind, und wobei in dem Fernsehempfänger ein zweiter Speicher vorgesehen ist, **dadurch gekennzeichnet**, daß auf den Befehl hin den benötigten Daten zugeordnete Videotextsignale in dem als Zwischenspeicher ausgebildeten zweiten Speicher des Fernsehempfängers gespeichert werden, daß aus den in dem Zwischenspeicher gespeicherten Videotextsignalen alsbald oder auf besonderen Befehl hin die benötigten Daten entnommen und drahtlos zum Videorecorder übertragen werden, wo sie im Programmierspeicher (T) des Videorecorders gespeichert werden, und daß sowohl der Fernsehempfänger als auch der Videorecorder jeweils mit einem Sender (IR2, IR12) und einem Empfänger (IR1, IR11) ausgerüstet sind, damit ein Dialog zwischen Fernsehempfänger und Videorecorder ermöglicht wird in einem oder mehreren der folgenden Fälle:
a) bei Übernahme der Daten in den Programmierspeicher (T),
b) bei Überlauf des Programmierspeichers (T),
c) Plätze im Programmierspeicher (T) abgearbeitet,
d) Plätze im Programmierspeicher (T) noch nicht abgearbeitet,
e) fehlerhafte Übertragung erkannt,
f) Rückmelden von im Programmierspeicher (T) freigewordenen Plätzen.

3. Verfahren nach Anspruch 1 oder 2, **dadurch gekennzeichnet**, daß im Programmierspeicher (T) des Videorecorders enthaltene Daten oder Aufzeichnungsaufträge betreffende Informationen drahtlos zum Fernsehempfänger übertragbar und auf dessen Bildschirm darstellbar sind.

4. Verfahren nach einem der vorangehenden Ansprüche, **dadurch gekennzeichnet**, daß die Übertragung vom Fernsehempfänger zum Videorecorder über eine Infrarotstrecke (IR2 - IR11) erfolgt.

5. Verfahren nach einem der vorangehenden Ansprüche, **dadurch gekennzeichnet**, daß die Übertragung vom Videorecorder zum Fernsehempfänger über eine Infrarotstrecke (IR12 - IR1) erfolgt.

6. Verfahren nach einem der vorangehenden Ansprüche, **dadurch gekennzeichnet**, daß die zu übertragenden Daten codiert übertragen werden und daß die im Videorecorder empfangenen Daten nach gegebenenfalls erforderlichem Decodieren im Programmierspeicher gespeichert werden.

7. Verfahren nach einem der vorangehenden Ansprüche, **dadurch gekennzeichnet**, daß bei einem über eine Fernbedieneinheit programmierbaren Videorecorder die vom Fernsehempfänger zum Videorecorder zu übertragenden Daten den entsprechenden, von der Fernbedieneinheit ausgesandten Daten gleichen.

8. Verfahren nach einem der vorangehenden Ansprüche, **dadurch gekennzeichnet**, daß zusätzlich zu den den benötigten Daten entsprechenden Videotextsignalen weitere der gewünschten Sendung zugeordnete Videotextsignale in dem Zwischenspeicher gespeichert werden.

9. Verfahren nach Anspruch 3 und 8, **dadurch gekennzeichnet**, daß bei der Darstellung auf dem Bildschirm auch auf den ursprünglichen Videotexttafeln enthaltene, der jeweiligen Sendung zugeordnete Textzeilen darstellbar sind, sofern in dem Zwischenspeicher dazu noch Informationen vorhanden sind.

10. Verfahren nach einem der vorangehenden Ansprüche, **dadurch gekennzeichnet**, daß mehrere mittels der Markierung ausgewählte Sendungen zunächst im Zwischenspeicher des Fernsehempfängers nacheinander speicherbar sind und deren zum Programmieren benötigte Daten anschließend als ein Block zum Videorecorder übertragbar sind.

11. Einrichtung zum Programmieren eines Videorecorders mit Daten, die zum Aufzeichnen gewünschter Sendungen benötigt werden, unter Verwendung eines zum Empfang und zur Wiedergabe von Videotextsignalen geeigneten Fernsehempfängers, wobei die benötigten Daten aus Programmankündigungen aufweisenden, über Videotextsignale übermittelten Tafeln (Videotexttafeln) mit Hilfe einer einstellbaren Markierung auf Befehl aus einem ersten Speicher (Videotextspeicher) des Fernsehempfängers entnehmbar und in einen Speicher (Programmierspeicher (T)) des Videorecorders eingebbar sind, und wobei in dem Fernsehempfänger ein zweiter Speicher vorgesehen ist, **dadurch gekennzeichnet**, daß der zweite Speicher des Fernsehempfängers als Zwischenspeicher ausgebildet ist, in dem auf den Befehl hin den benötigten Daten zugeordnete Videotextsignale gespeichert werden, daß Mittel (VPVµP, 50, IR2, IR11) zum alsbaldigen oder auf besonderen Befehl hin erfolgenden, drahtlosen Übertragen der aus den in dem Zwischenspeicher gespeicherten Videotextsignalen entnommenen benötigten Daten zum Videorecorder vorgesehen sind, wo sie im Programmierspeicher (T) des Videorecorders gespeichert werden, daß Mittel (VPVµP, 20b, 30, VT) zum auf Abruf auf dem Bildschirm (RGB) des Fernsehempfängers erfolgenden Darstellen der in dem Zwischenspeicher gespeicherten Videotextsignale vorgesehen sind, und daß in dem Zwischenspeicher eine oder mehrere Zeilen einer oder mehrerer Videotexttafeln speicherbar sind.

12. Einrichtung zum Programmieren eines Videorecorders mit Daten, die zum Aufzeichnen gewünschter Sendungen benötigt werden, unter Verwendung eines zum Empfang und zur Wiedergabe von Videotextsignalen geeigneten Fernsehempfängers, wobei die benötigten Daten aus Programmankündigungen aufweisenden, über Videotextsignale übermittelten Tafeln (Videotexttafeln) mit Hilfe einer einstellbaren Markierung auf Befehl aus einem ersten Speicher (Videotextspeicher) des Fernsehempfängers entnehmbar und in einen Speicher (Programmierspeicher (T)) des Videorecorders eingebbar sind, und wobei in dem Fernsehempfänger ein zweiter Speicher vorgesehen ist, dadurch gekennzeichnet, daß der zweite Speicher des Fernsehempfängers als Zwischenspeicher ausgebildet ist, in den auf den Befehl hin den benötigten Daten zugeordnete Videotextsignale gespeichert werden, daß Mittel (VPVµP, 50, IR2, IR11) zum alsbaldigen oder auf besonderen Befehl hin erfolgenden, drahtlosen Übertragen der aus den in dem Zwischenspeicher gespeicherten Videotextsignalen entnommenen benötigten Daten zum Videorecorder vorgesehen sind, wo sie im Programmierspeicher (T) des Videorecorders gespeichert werden, und daß sowohl der Fernsehempfänger als auch der Videorecorder jeweils mit einem Sender (IR2, IR12) und einem Empfänger (IR1, IR11) ausgerüstet sind, damit ein Dialog zwischen Fernsehempfänger und Videorecorder ermöglicht wird in einem oder mehreren der folgenden Fälle:
a) bei Übernahme der Daten in den Programmierspeicher (T),
b) bei Überlauf des Programmierspeichers (T),
c) Plätze im Programmierspeicher (T) abgearbeitet,
d) Plätze im Programmierspeicher (T) noch nicht abgearbeitet,
e) fehlerhafte Übertragung erkannt,
f) Rückmelden von im Programmierspeicher (T) freigewordenen Plätzen.

## Claims

1. Method for the programming of a video recorder with data which are necessary for the recording of wanted transmissions by the use of a television receiver suitable for the reception and for the reproduction of teletext signals, wherein the necessary data, from sheets (teletext pages) showing programme listings and conveyed by teletext signals, are extractable with the aid of an adjustable marking, on command, from a first memory (teletext memory) of the television receiver and are enterable into a memory (programme memory (T)) of the video recorder, and wherein a second memory is provided in the television receiver, characterised in that, upon the occurrence of the command, the teletext signals associated with the necessary data are stored in the second memory of the television receiver which is formed as a buffer store, that the necessary data are immediately, or upon special command, extracted from the teletext signals stored in the buffer store and transferred without wires to the video recorder where they are stored in the programme memory (T) of the video recorder, that the teletext signals stored in the buffer store are displayable on the screen of the television receiver upon demand, and that one or more lines of one or more teletext sheets are storable in the buffer store.

2. Method for the programming of a video recorder with data which are necessary for the recording of wanted transmissions by the use of a television receiver suitable for the reception and for the reproduction of teletext signals, wherein the necessary data, from sheets (teletext pages) showing programme listings and conveyed by teletext signals, are extractable with the aid of an adjustable marking, on command, from a first memory (teletext memory) of the television receiver and are enterable into a memory (programme memory (T)) of the video recorder, and wherein a second memory is provided in the television receiver, characterised in that, upon the occurrence of the command, the teletext signals associated with the necessary data are stored in the second memory of the television receiver which is formed as a buffer store, that the necessary data are immediately, or upon special command, extracted from the teletext signals stored in the buffer store and transferred without wires to the video recorder where they are stored in the programme memory (T) of the video recorder, and that both the television receiver and the video recorder are respectively equipped with a transmitter (IR2, IR12) and a receiver (IR1, IR11) with which a dialogue between television receiver and video recorder is made possible in one or more of the following instances:
a) upon acceptance of the data into the programme memory (T),
b) upon overflow of the programme memory (T),
c) positions in the programme memory (T) processed,
d) positions in the programme memory (T) not yet processed,
e) defective transmission detected,
f) feedback of positions in the programme memory (T) that have become free.

3. Method in accordance with Claim 1 or 2, characterised in that, data contained in the programme memory (T) of the video recorder or items of information regarding recording requirements are transferrable without wires to the television receiver and displayable on its screen.

4. Method in accordance with any of the preceding Claims, characterised in that, the transfer from the television receiver to the video recorder takes place over an infrared path (IR2 - IR11).

5. Method in accordance with any of the preceding Claims, characterised in that, the transfer from the video recorder to the television receiver takes place over an infrared path (IR12 - IR1).

6. Method in accordance with any of the preceding Claims, characterised in that, the data to be transferred are transferred coded and that the data received in the video recorder are stored in the programme memory after, if applicable, the necessary decoding.

7. Method in accordance with any of the preceding Claims, characterised in that, in a video recorder programmable by a remote control unit, the data to be transferred from the television receiver to the video recorder are similar to the corresponding data transmitted by the remote control unit.

8. Method in accordance with any of the preceding Claims, characterised in that, in addition to the teletext signals corresponding to the necessary data, further teletext signals associated with the wanted transmission are stored in the buffer store.

9. Method in accordance with Claim 3 and 8, characterised in that, text lines contained in the original teletext sheets and associated with the respective transmission are also portrayable in the display on the screen in so far as additional items of information are available in the buffer store.

10. Method in accordance with any of the preceding Claims, characterised in that, a plurality of transmissions selected by means of the marking are initially storable one after the other in the buffer store of the television receiver and their data necessary for the programming are transferable thereafter as a block to the video recorder.

11. Device for the programming of a video recorder with data which are necessary for the recording of wanted transmissions by the use of a television receiver suitable for the reception and for the reproduction of teletext signals, wherein the necessary data, from sheets (teletext pages) showing programme listings and conveyed by teletext signals, are extractable with the aid of an adjustable marking, on command, from a first memory (teletext memory) of the television receiver and are enterable into a memory (programme memory (T)) of the video recorder, and wherein a second memory is provided in the television receiver, characterised in that, the second memory of the television receiver is formed as a buffer store, in which, upon the occurrence of the command, the teletext signals associated with the necessary data are stored, that means (VPVµP, 50, IR2, IR11) are provided for the immediate, or resulting from the occurrence of a special command, transfer of the necessary data extracted from the teletext signals stored in the buffer store, without wires, to the video recorder, where they are stored in the programme memory (T) of the video recorder, that means (VPVµP, 20b, 30, VT) are provided for the display on the screen (RGB) of the television receiver, occurring upon demand, of the teletext signals stored in the buffer store, and that one or more lines of one or more teletext sheets are storable in the buffer store.

12. Device for the programming of a video recorder with data which are necessary for the recording of wanted transmissions by the use of a television receiver suitable for the reception and for the reproduction of teletext signals, wherein the necessary data, from sheets (teletext pages) showing programme listings and conveyed by teletext signals, are extractable with the aid of an adjustable marking, on command, from a first memory (teletext memory) of the television receiver and are enterable into a memory (programme memory (T)) of the video recorder, and wherein a second memory is provided in the television receiver, characterised in that, the second memory of the television receiver is formed as a buffer store, in which, upon the occurrence of the command, the teletext signals associated with the necessary data are stored, that means (VPVµP, 50, IR2, IR11) are provided for the immediate, or resulting from the occurrence of a special command, transfer of the necessary data extracted from the teletext signals stored in the buffer store, without wires, to the video recorder, where they are stored in the programme memory (T) of the video recorder, and that both the television receiver and the video recorder are respectively equipped with a transmitter (IR2, IR12) and a receiver (IR1, IR11) with which a dialogue between television receiver and video recorder is made possible in one or more of the following instances:
a) upon acceptance of the data into the programme memory (T),
b) upon overflow of the programme memory (T),
c) positions in the programme memory (T) processed,
d) positions in the programme memory (T) not yet processed,
e) defective transmission detected,
f) feedback of positions in the programme memory (T) that have become free.

## Revendications

1. Procédé pour programmer un magnétoscope avec des données qui sont requises pour enregistrer des émissions souhaitées qui utilise un récepteur de télévision approprié pour la réception et la restitution de signaux de télétexte, les données requises pouvant être prélevées, en réponse à un ordre, de tableaux transmis par des signaux de télétexte (tableaux de télétexte) qui présentent des annonces de programme à partir d'une première mémoire (mémoire de vidéotexte) du récepteur de télévision à l'aide d'un repère réglable et pouvant être entrées dans une mémoire (mémoire de programmation T) du magnétoscope et une seconde mémoire étant prévue dans le récepteur de télévision, **caractérisé en ce** que des signaux de télétexte affectés aux données requises sont mémorisées, en réponse à l'ordre, dans la seconde mémoire du récepteur de télévision qui est configurée comme une mémoire intermédiaire, que les données requises sont prises aussitôt ou sur un ordre spécial à partir des signaux de télétexte mémorisés dans la mémoire intermédiaire et sont transférées sans fil au magnétoscope où elles sont mémorisées dans la mémoire de programmation (T) du magnétoscope, que les signaux de télétexte mémorisés dans la mémoire intermédiaire peuvent être représentés sur appel sur l'écran du récepteur de télévision et qu'une ou plusieurs lignes d'un ou plusieurs tableaux de télétexte peuvent être mémorisées dans la mémoire intermédiaire.

2. Procédé pour programmer un magnétoscope avec des données qui sont requises pour enregistrer des émissions souhaitées qui utilise un récepteur de télévision approprié pour la réception et la restitution de signaux de télétexte, les données requises pouvant être prélevées, en réponse à un ordre, de tableaux transmis par des signaux de télétexte (tableaux de télétexte) qui présentent des annonces de programme à partir d'une première mémoire (mémoire de vidéotexte) du récepteur de télévision à l'aide d'un repère réglable et pouvant être entrées dans une mémoire (mémoire de programmation T) du magnétoscope et une seconde mémoire étant prévue dans le récepteur de télévision, **caractérisé en ce** que des signaux de télétexte affectés aux données requises sont mémorisés, en réponse à l'ordre, dans la seconde mémoire du récepteur de télévision qui est configurée comme une mémoire intermédiaire, que les données requises sont prises aussitôt ou sur un ordre spécial à partir des signaux de télétexte mémorisés dans la mémoire intermédiaire et sont transférées sans fil au magnétoscope où elles sont mémorisées dans la mémoire de programmation (T) du magnétoscope et que le récepteur de télévision aussi bien que le magnétoscope sont équipés respectivement d'un émetteur (IR1, IR12) et d'un récepteur (IR1, IR11) pour qu'un dialogue entre le récepteur de télévision et le magnétoscope soit possible dans l'un ou plusieurs des cas suivants :
a) lors du transfert des données dans la mémoire de programmation (T),
b) lors du dépassement de la capacité de la mémoire de programmation (T),
c) places dans la mémoire de programmation (T) prises en charge
d) places dans la mémoire de programmation (T) pas encore prises en charge
e) reconnaissance d'une mauvaise transmission
f) information de retour sur les places devenues libres dans la mémoire de programmation (T).

3. Procédé selon la revendication 1 ou 2, **caractérisé en ce** que des données contenues dans la mémoire de programmation (T) du magnétoscope ou des informations concernant des ordres d'enregistrement peuvent être transférées sans fil au récepteur de télévision et peuvent être représentées sur son écran.

4. Procédé selon l'une des revendications précédentes. **caractérisé en ce** que le transfert du récepteur de télévision au magnétoscope se fait par une voie infrarouge (IR2, IR11).

5. Procédé selon l'une des revendications précédentes. **caractérisé en ce** que le transfert du récepteur de télévision au magnétoscope se fait par une voie infrarouge (IR12, IR1).

6. Procédé selon l'une des revendications précédentes. **caractérisé en ce** que les données à transférer sont transmises en étant codées et que les données reçues dans le magnétoscope sont mémorisées dans la mémoire de programmation après un décodage éventuellement nécessaire.

7. Procédé selon l'une des revendications précédentes, **caractérisé en ce** que, dans un magnétoscope programmable par une unité de télécommande, les données à transférer du récepteur de télévision au magnétoscope sont pareilles que les données correspondantes émises par l'unité de télécommande.

8. Procédé selon l'une des revendications précédentes, **caractérisé en ce** que d'autres signaux de télétexte affectés à l'émission souhaitée sont mémorisés dans la mémoire intermédiaire en plus des signaux de télétexte correspondant aux données nécessaires.

9. Procédé selon les revendications 3 et 8, **caractérisé en ce** que des lignes de texte affectées à l'émission respective, contenues sur les tableaux de télétexte d'origine, peuvent également être représentées sur l'écran, lors de la reproduction sur l'écran, dans la mesure où des informations là-dessus existent encore dans la mémoire intermédiaire.

10. Procédé selon l'une des revendications précédentes, **caractérisé en ce** que plusieurs émissions sélectionnées au moyen du repère peuvent être tout d'abord mémorisées l'une après l'autre dans la mémoire intermédiaire du récepteur de télévision et que leurs données requises pour la programmation peuvent ensuite être transférées au magnétoscope comme bloc.

11. Dispositif pour programmer un magnétoscope avec des données qui sont requises pour enregistrer des émissions souhaitées qui utilise un récepteur de télévision approprié pour la réception et la restitution de signaux de télétexte, les données requises pouvant être prélevées, en réponse à un ordre, de tableaux transmis par des signaux de télétexte (tableaux de télétexte) qui présentent des annonces de programme à partir d'une première mémoire (mémoire de vidéotexte) du récepteur de télévision à l'aide d'un repère réglable et pouvant être entrées dans une mémoire (mémoire de programmation T) du magnétoscope et une seconde mémoire étant prévue dans le récepteur de télévision, **caractérisé en ce** que la seconde mémoire du récepteur de télévision est configurée comme une mémoire intermédiaire dans laquelle des signaux de télétexte affectés aux données requises sont mémorisés en réponse à l'ordre, que des moyens (VPVµP, 50, IR2, IR11) pour le transfert sans fil, effectué immédiatement ou sur un ordre spécial, des données requises prises dans les signaux de télétexte mémorisés dans la mémoire intermédiaire au magnétoscope sont prévus où elles sont mémorisées dans la mémoire de programmation (T) du magnétoscope, que des moyens (VPVµP, 20b, 30, VT) sont prévus pour la représentation des signaux de télétexte mémorisés dans la mémoire intermédiaire pour la représentation sur l'écran (RGB) du récepteur de télévision. effectuée sur appel, et qu'une ou plusieurs lignes d'un ou de plusieurs tableaux de télétexte peuvent être mémorisées dans la mémoire intermédiaire.

12. Dispositif pour programmer un magnétoscope avec des données qui sont requises pour enregistrer des émissions souhaitées qui utilise un récepteur de télévision approprié pour la réception et la restitution de signaux de télétexte, les données requises pouvant être prélevées, en réponse à un ordre, de tableaux transmis par des signaux de télétexte (tableaux de télétexte) qui présentent des annonces de programme à partir d'une première mémoire (mémoire de vidéotexte) du récepteur de télévision à l'aide d'un repère réglable et pouvant être entrées dans une mémoire (mémoire de programmation T) du magnétoscope et une seconde mémoire étant prévue dans le récepteur de télévision, **caractérisé en ce** que la seconde mémoire du récepteur de télévision est configurée comme une mémoire intermédiaire dans laquelle des signaux de télétexte affectés aux données requises sont mémorisés en réponse à l'ordre, que des moyens (VPVµP, 50, IR2, IR11) pour le transfert sans fil des données requises prises dans les signaux de télétexte mémorisés dans la mémoire intermédiaire au magnétoscope, effectué immédiatement ou sur un ordre spécial, sont prévus où elles sont mémorisées dans la mémoire de programmation (T) du magnétoscope et que le récepteur de télévision aussi bien que le magnétoscope sont équipés respectivement d'un émetteur (IR2, IR12) et d'un récepteur (IR1, IR11) pour qu'un dialogue entre le récepteur de télévision et le magnétoscope soit possible dans l'un ou plusieurs des cas suivants :
a) lors du transfert des données dans la mémoire de programmation (T),
b) lors du dépassement de la capacité de la mémoire de programmation (T),
c) places dans la mémoire de programmation (T) prises en charge
d) places dans la mémoire de programmation (T) pas encore prises en charge
e) reconnaissance d'une mauvaise transmission
f) information de retour sur les places devenues libres dans la mémoire de programmation (T).
